# EUROPÄISCHE PATENTSCHRIFT

(11) **EP 0 690 325 B1**
(45) Veröffentlichungstag und Bekanntmachung des Hinweises auf die Patenterteilung: **20.01.1999**
(21) Anmeldenummer: 95107659.5
(22) Anmeldetag: 19.05.1995
(51) Int. Cl.: G02B 6/44, H02G 15/117

(54) **Muffe zum Schutz von Kabelspleissen**
Function enclosure for protection of cable-splices
Boîte de jonction pour la protection d'épissures de câbles

(30) Priorität: 30.06.1994 DE 9410568 U
(43) Veröffentlichungstag der Anmeldung: 03.01.1996
(73) Patentinhaber: REHAU AG + Co, 95111 Rehau (DE)
(72) Erfinder: Beyer, Wolfgang, C/O Rehau AG + Co, D-95111 Rehau (DE)

(56) Entgegenhaltungen:
- EP-A- 0 185 923
- DE-A- 3 841 607
- DE-A- 4 132 519
- DE-U- 9 115 060
- FR-A- 2 561 002
- PATENT ABSTRACTS OF JAPAN vol. 007 no. 002 (P-166) 7.Januar 1983 & JP-A-57 163211 (KOKUSAI DENSHIN DENWA KK) 7.Oktober 1982

## Beschreibung

Die Erfindung betrifft eine Muffe zum Schutz der Kabelspleisse von elektrischen oder Nachrichtenkabeln, bestehend aus einem oder mehreren Elementen für die Leiterverbindung und einem äußeren Muffenkörper als Schutzhülle für die Spleissverbindung, wobei die Schutzhülle die Dichtfunktion zum Kabel übernimmt und gleichzeitig die Spleissverbindung vor äußeren Einflüssen schützt.

Derartige Muffen werden nach dem Stand der Technik unterschieden in Muffen mit Einführungen für einsteckbare Kabel (geschnittene Kabel) und einlegbare Kabel (ungeschnittene Kabel). Bei den einsteckbaren Kabeln kann es sich um ein Dichtungsformteil handeln, durch welches das Kabel hindurchgesteckt wird. Hier sind aus dem Stand der Technik beispielsweise Rohrstutzen bekannt, die durch Umschrumpfen mit einem Schrumpfschlauch zum Kabel hin abgedichtet werden.

Bei den einlegbaren oder ungeschnittenen Kabeln werden in der Regel teilbare Muffenköpfe verwendet, die entsprechend den einzuführenden Kabeln aufgebohrt oder ausgebrochen werden können. Zur Abdichtung wird zwischen dem Muffenkopf und dem Kabel ein in der Regel plastisches Dichtungsband beigelegt. Danach werden die Muffenkopfteile um die Kabel herum angeordnet und verspannt. Das plastische Dichtungsband wirkt dabei als Abdichtung gegen die Umgebungsatmosphäre.

Es ist aus dem Stand der Technik ferner bekannt, daß zur Abdichtung des Raumes zwischen einem eingeführten Kabel und dem Muffenkopf dieser Raum mit einer Dichtmasse ausgespritzt wird.

Bei den Muffen nach dem Stand der Technik ist die Abdichtungsfunktion jeweils in Abhängigkeit von der Arbeitsqualität zu sehen. Dies ist ein Grund für ständige Unsicherheit und es besteht kaum die Möglichkeit einer optischen Kontrolle zur Prüfung der Dichtheit.

Es sind bei den Muffen nach dem Stand der Technik eine ganze Anzahl von Arbeitsschritten gewissenhaft auszuführen, da hier eine Reihe von unterschiedlichen Bauteilen zusammengebaut werden müssen. Diese Arbeiten sind für Muffenmontagen im freien Arbeitsraum, vermehrt jedoch im Kabelgraben oder im Kabelschacht nachteilig, da keine Garantien für stets sauberes Arbeiten übernommen werden können.

Darüberhinaus ist nach dem Stand der Technik eine Montage der Kabelmuffen außerhalb des Kabelschachtes nur in geringem Maße möglich, nämlich nur dann, wenn die Ablage der Kabelschleifen nicht durch die übrigen Kabelmuffen im Schacht behindert wird. So ist es nach dem derzeitigen Stand der Technik üblich, die Muffen hauptsächlich im Kabelschacht selbst zu spleissen, damit keine zusätzlichen zu lagernden Kabelüberlängen auftreten. Die Muffen werden dabei auf geeigneten Unterlagen innerhalb der Abstände der Lagerebenen von jeweils 30 cm in einer Art Regalsystem abgelegt.

Der Nachteil des Vorgehens nach dem Stand der Technik ist darin zu sehen, daß nur in den wenigsten Fällen die Kabelspleisse außerhalb des Kabelschachtes durchgeführt werden können. Dies bedeutet, daß die Kabelspleissarbeiten jeweils in stark beengtem Raum durchgeführt werden müssen, wodurch diese schwierige Technik noch mehr erschwert wird.

Gegenüber diesem Stand der Technik hat sich die Erfindung die Aufgabe gestellt, ausgehend von einer neuen Kabelspleissmuffe ein Lagersystem zu schaffen, mit dem eine platzsparende Lagerung von Muffen und Kabeln im Schacht möglich ist. Die neue Kabelspleissmuffe soll so gestaltet sein, daß die Unterschreitung der kleinstzulässigen Kabelbiegeradien durch die Gestaltung der Systembauteile verhindert wird. Darüberhinaus ist es Aufgabe der Erfindung, über das neue Lagersystem eine Vielzahl von Muffen im Kabelschacht unterzubringen und dabei gleichzeitig eine geordnete Kabelführung zu erreichen, um bei späteren Spleissarbeiten einen leichten Zugriff auf die entsprechenden Muffen zu ermöglichen.

Erfindungsgemäß wird dazu eine Muffe gemäß Anspruch 1 vorgeschlagen daß der Muffenkörper aus einem oder mehreren Rohrsegmenten besteht, deren Endbereiche einander überlappen und zwischen sich wenigstens eine Kabeleinlaßöffnung in tangentialer Richtung bilden, und daß das dadurch gebildete Aufnahmevolumen des Muffenkörpers von einem oberen und einem unteren Deckteil abgedeckt ist, wobei das untere Deckteil fest mit den Rohrsegmenten verbunden ist.

Erfindungsgemäß wird also eine neue, scheibenartige, flache Muffe vorgeschlagen, an deren radialem Umfang mehrere Kabeleinführöffnungen angebracht sind. Aus diesen Kabeleinführöffnungen können die Kabel in tangentialer Richtung herausgeführt werden, wobei Kabelüberlängen durch Drehen der Muffe an ihrem radialen Umfang am Muffenkörper aufgewickelt werden können.

Zur Erzielung dieser Drehbewegung ist vorteilhaft im Zentrum des Muffenkörpers ein der Höhe der Rohrsegmente entsprechender Abstandhalter mit einer zentrischen Durchgangsöffnung angeordnet, welcher an seinen freien Enden unter Freihaltung der Durchgangsöffnung mit dem oberen und unteren Deckteil dicht verbunden ist. Der Muffenkörper kann über diese zentrische Durchgangsöffnung auf eine Drehachse, die beispielsweise im Kabelschacht angeordnet ist, aufgesteckt und mit dieser Drehachse verriegelt werden. Die Drehachse kann beispielsweise in den Kabelhalterschienen der Schachtwände eingelängt werden. Aufgrund der erfindungsgemäßen flachen Bauform des Muffenkörpers können mehrere Muffen auf einer Achse aufgesteckt sein, wodurch eine vielfache Raumausnutzung ermöglicht wird.

Die zu- und abführenden Kabel werden in horizontaler Richtung an den Muffenkörper herangeführt, wobei die Wickelrichtung durch die Kabeleinführöffnungen des Muffenkörpers festgelegt ist. Bei Drehung der Muffe um 180° wird die Drehrichtung des Kabels umgekehrt, wobei innerhalb eines Schachtes die Drehrichtungen der Muffen allerdings gleich zu wählen sind, damit die Ordnung der Kabel im Schachtbereich beibehalten wird.

Um freien Zugang zu den einzelnen Muffen in einem Kabelschacht zu erhalten, kann es notwendig sein, die auf eine Drehachse aufgesteckten verschiedenen Muffenkörper umzulagern. Dazu ist es vorteilhaft, die nicht benötigten Muffenkörper von der einen auf die andere Kabelschachtseite umzustecken, wobei der Ordnung halber ihre relative Position beibehalten wird. Die gewünschte Muffe kann nach dem Umsteckvorgang von der Drehachse abgenommen und aus dem Schacht herausgeführt werden. Dabei ist es vorteilhaft, daß durch einfache Drehung des Muffenkörpers die Kabelüberlänge frei wird und die Muffe zur Montage ohne Schwierigkeiten nach außen aus dem Kabelschacht herausgeführt werden kann.

Damit an der späteren Lagerungsposition die an- und abgehenden Kabel gleichmäßig von beiden Seiten aufgewickelt werden können, ist es notwendig, die Kabelüberlängen einheitlich festzulegen. Dabei spielt die absolute Länge nur eine untergeordnete Rolle, da die an- und abgehenden Kabel nur die gleichen Überlängen haben müssen. Dazu wird als Fixpunkt die Drehachse gewählt, um die die Kabel von beiden Seiten nach oben umgelenkt werden, wonach die Kabel auf die gleiche Länge zugeschnitten werden können. Bei durchgehenden Kabeln wird die ebenfalls so ermittelte Position mittig um den Abstandhalter des Muffenkörpers gelegt und durch Drehung des Muffenkörpers wird die Kabelüberlänge in diesem Fall aufgespult. Diese Möglichkeit der Aufspulung von Kabelüberlängen ist als wesentlicher Vorteil der erfindungsgemäßen Kabelmuffe gegenüber dem bisherigen Stand der Technik anzusehen.

Ein weiterer Vorteil ergibt sich dadurch, daß das obere Deckteil dekkelförmig ausgebildet ist und zur Öffnung der Muffe von den Rohrsegmenten abhebbar ist. Nachträglich kann der Deckel wieder fest und dichtend mit den Rohrsegmenten verbunden werden.

Neben der festen Dichtung des Muffenkörpers über den beweglichen Deckelteil ist es wesentlicher Bestandteil der Erfindung, daß die Kabeleinlaßöffnungen im Bereich der überlappenden Rohrsegmente im Querschnitt des Aufnahmevolumens mit oder ohne Kabelbelegung gegen die äußere Umgebung abgedichtet werden können. Hierzu können die Kabel selbst mit einem elastischen Dichtteil umhüllt und das Kabel mit diesem Dichtteil direkt am Muffeneingang in entsprechend geformte Schächte eingepaßt werden, die mit den Dichtteilen vollständig ausgefüllt sind. Die Dichtteile bestehen aus quadratischen, rechteckigen oder anders geformten vieleckigen Formteilen, die jeweils beliebig kombiniert werden können, um die unterschiedlichsten Kabelkombinationen im Muffenschacht einlegen zu können.

Vorzugsweise besitzen die Dichtteile zwiebelringartige Einschnitte, an denen schichtweise Material abgezogen werden kann. Damit sind die Dichtteile an verschiedene Kabeldurchmesser anpaßbar.

Die konzentrische Öffnung innerhalb des Dichtteiles ist dabei so bemessen, daß das einzuführende Kabel im Durchmesser noch größer ist als der ausgesparte Freiraum im Dichtteil. Um auch ungeschnittene Kabel einsetzen zu können, kann das Dichtteil mit einem Einschnitt versehen werden, durch den sich das Dichtteil aufklappen läßt, um das Kabel einzulegen. Um eine sichere Abdichtung zwischen Muffenkörper und Kabel zu gewährleisten, ist es notwendig, das Dichtteil innerhalb des Muffenschachtes zu komprimieren. Oft werden solche Dichtungen axial über Verschraubungen verpresst. Bei der vorliegenden Erfindung wird jedoch die Kompression dadurch erreicht, daß das Dichtstück von seinen Außenmaßen her um einige Millimeter größer ist als der lichte Freiraum innerhalb des Muffenschachtes, in den das Dichtteil eingeschoben wird.

Damit sich das Dichtteil mit dem notwendigen Druck besser in den Schacht einpressen läßt, ist die Wandung des Schachtes bzw. das Dichtteil selbst mit einem Gleitmittel wie Silikon, Schmierseite und dergleichen beschichtet. Zur Verbesserung der Dichtwirkung zwischen Dichtteil und Schachtwandung sind aus der Wandung vorragende Dichtleisten angebracht, die das Dichtteil partiell stärker verformen und höhere Anpressdrücke erreichen. Die Anpresskraft selbst wird durch das Aufsetzen des oberen Deckteils erzeugt, welches gemäß der Erfindung fest und dichtend mit den Rohrsegmenten verbindbar ist.

Mit dieser Art der Kabeleinführabdichtung in den erfindungsgemäßen Kabelmuffen wird eine Verbesserung der Arbeitsergebnisse bei gleichzeitiger Arbeitserleichterung durch weniger Montageschritte erzielt. Auch ist dadurch eine direkte optische Kontrolle über die ausgeführte Kabelabdichtung möglich, wodurch schwerwiegende Montagefehler vermieden werden. Durch einen geeigneten Systemaufbau der Dichtteilformen können die einzuführenden Kabel beliebig kombiniert werden. Genaue Bohrarbeiten und dergleichen entfallen, da die Dichtteile aufeinander abgestimmt sind und die Anpassung an die Kabeldurchmesser durch einfaches Abziehen überzähligen. Materials erreicht wird. Für die Montage einer solchen Dichtung innerhalb der erfindungsgemäßen Kabelmuffe sind keinerlei Spezialwerkzeuge erforderlich.

Die erfindungsgemäße Kabelmuffe wird in vertikaler Richtung parallel zur Schachtwand an den senkrecht von der Schachtwand abragenden Drehachsen aufgesteckt. Dadurch befindet sich im Zentrum der Kabelmuffe die über den Abstandhalter erzeugte Durchgangsöffnung. Die Kabelmuffe selbst ist damit drehbar wie ein Rad auf der Drehachse gelagert. Diese Drehfähigkeit über der Drehachse, die als Fixpunkt für die Drehbewegung dient, ist ausschlaggebend für den Vorteil, daß erfindungsgemäß die tangential aus der Kabelmuffe heraustretenden Kabel direkt auf den Muffenkörper aufgewickelt werden können.

Damit die Kabel beim Aufwickeln geführt werden, befinden sich am oberen und am unteren Deckteil nach außen verlängerte Wandbereiche, zwischen denen die Kabel in einer Art umlaufenden Kabelkanal gefaßt werden. Vorzugsweise sind diese verlängerten Wandbereiche nur partiell ausgeführt, so daß zum einen eine optische Kontrolle zur Wickelhöhe vorhanden ist und zum anderen dadurch Griffmulden entstehen, an denen die Muffe zum Aufwickeln der Kabel gedreht werden kann.

Damit sich die Kabelmuffe am Ende des Wickelvorgangs nicht mehr zurückdreht, kann der Muffenkörper mittels eines einschiebbaren Zapfens, der als Riegelelement dient, mit der Drehachse verriegelt werden.

Je nach Länge der Drehachse und nach Größe der Muffentiefe können mehrere Kabelmuffen auf einer Drehachse aufgesteckt werden. Die Kabel werden vorzugsweise an gegenüberliegenden Kabeleinführöffnungen in die Muffe eingeführt, da auch ungeschnittene Kabel in der Muffe untergebracht werden müssen. Dadurch ergibt sich eine Lagerung der Kabelmuffen im Kabelschacht wie folgt:

Die von links kommenden Kabel werden von oben an die Kabelmuffe herangeführt. Die von rechts kommenden Kabel werden von unten an die Kabelmuffen herangeführt. Damit die Kabel nach dem Wickelvorgang im Schacht ohne Durchhang von den Kabeleinführungsplatten bis zu den Kabelmuffen auf entsprechenden Kabelhaltern abgelegt werden können, sind die effektiven Kabelüberlängen auf beiden Seiten der Kabelmuffe gleich lang zu wählen. Die tatsächliche Länge spielt keine Rolle, es sind lediglich die gleichen Überlängen erforderlich.

Die gleichen Überlängen können entweder abgemessen werden oder alle betreffenden Kabel werden entsprechend der späteren Ablage im Schacht an den Fixpunkt "Drehachse" der Kabelmuffe herangeführt und von dort insgesamt zu einem Kabelbündel zusammengefaßt.

Dabei bestimmt das kürzeste Kabel des Kabelbündels die maximale gemeinsame Kabelüberlänge.

Bei durchlaufenden, ungeschnittenen Kabeln wird ähnlich verfahren und die Kabelschleife ab dem Fixpunkt parallel geführt. Der dadurch ermittelte Wendepunkt des Kabels entspricht exakt der Mitte der Kabelmuffe. Danach kann der Kabelmantel mittig vom Wendepunkt ausgehend auf die erforderliche Länge von ca. 1,6 m zur Freilegung der innenliegenden Leiter aus Glasfaser oder Kupfer abgeschält werden.

Die Kabel selbst werden über die tangential an der Kabelmuffe befindlichen Kabeleinführöffnungen in das Muffengehäuse eingebracht. Die Kabeleinführung erfolgt durch Einlegung der vorbereiteten Kabel in den Muffenschacht, welcher durch die sich überlappenden Enden der Rohrsegmente gebildet wird. Zur Vorbereitung des Spleissvorgangs gehören folgende Arbeitsschritte:
- das Abschälen des Kabelmantels
- das Freilegen der Bündeladern
- das Festlegen der Zugentlastung des Kabels im Inneren der Kabelmuffe
- im Bedarfsfall die elektrische Verbindung der Kabelmantelabschirmung
- das Festlegen des Kabels am Kabelmantel im Muffenschacht
- die Abdichtung zwischen Kabelmantel und Muffenschacht
- die mechanische Führung im Muffenschacht im Bereich des Kabelaustritts
Die freigelegten Bündeladern des Glasfaserkabels können bei Spleissung auf ein Abzweigkabel durchgetrennt und die einzelnen Lichtwellenleiter in einer zugehörigen Spleisskassette abgelegt werden. Dabei werden die Reservelängen der Bündeladern ringförmig in der Spleisskassette untergebracht.

Bei nur durchzuschleifenden Lichtwellenleitern können diese ungeschnitten in der Kabelmuffe verbleiben.

Je nach Größe der Kabelmuffe können ein oder mehrere Spleisskassettenplätze vorgesehen sein, an denen wiederum mehrere Spleisskassetten gestapelt werden können. Bei flachen Kabelmuffen kann diese Stapelung liegend übereinander erfolgen, während die Spleisskassetten bei höheren oder kleineren Kabelmuffen stehend nebeneinander gelagert sein können.

In der Zeichnung sind Ausführungsbeispiele der erfindungsgemäßen Kabelmuffe schematisch dargestellt; es zeigt:
Fig.1 die Kabelmuffe mit feststehendem und beweglichen Deckteil
Fig.2 die Kabelmuffe mit verlängerten Wandbereichen
Fig.3 die Kabelmuffe nach Fig. 2a in Draufsicht in geöffneter Form
Fig.4 den Austritt eines Glasfaserkabels aus einem Muffenschacht
Fig.5 die Kabelmuffe nach Fig.3 mit eingelegten Spleisskassetten

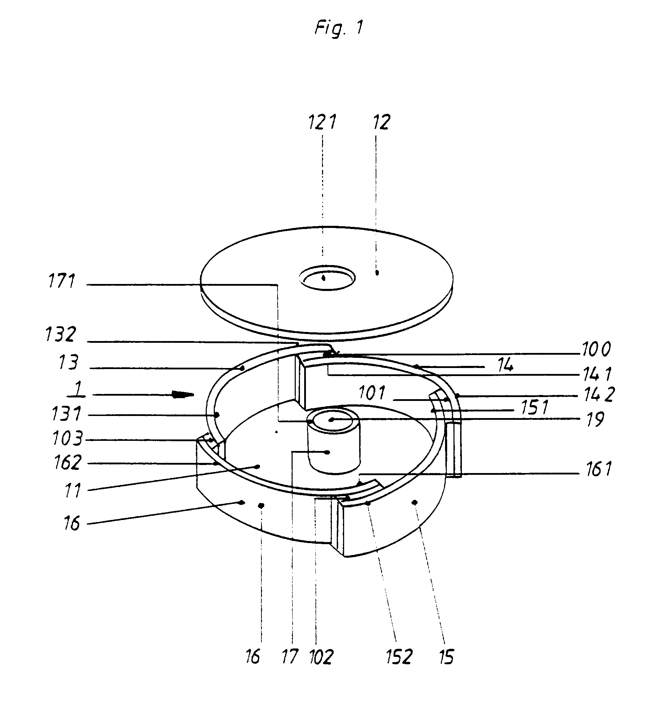

Fig.1 zeigt die Kabelmuffe 1 mit dem feststehenden unteren Deckteil 11 und dem abnehmbaren oberen Deckteil 12. Die Kabelmuffe 1 besteht aus den Rohrsegmenten 13, 14, 15, 16, mit ihren überlappenden Endbereichen 132 gegen 141, 142 gegen 151, 152 gegen 161 und 162 gegen 131. Im Bereich der Überlappungen sind die Kabeleinlaßöffnungen 100, 101, 102 und 103 gebildet. Die Kabeleinlaßöffnungen 100, 101, 102 und 103 führen in tangentialer Richtung zwischen den Rohrsegmenten 13, 14, 15, 16 aus dem Muffeninneren ins Freie. Die Kabeleinlaßöffnungen 100, 101, 102 und 103 sind durch entsprechende Dichtkörper gegen die Umgebung abgedichtet.

Das obere Deckteil 12 wird zur Vervollständigung der Kabelmuffe 1 auf die freien Stirnflächen der Rohrsegmente 13, 14, 15, 16 aufgesetzt. Dabei greift das freie Ende 171 des mit dem unteren Deckteil 11 fest verbundenen Abstandhalters¹⁷ durch die zentrale Mittelöffnung 121 des oberen Deckteils 12 und legt dieses zentrisch auf der Kabelmuffe 1 fest. Das obere Deckteil 12 kann im Bereich der zentralen Mittelöffnung 121 und seines umlaufenden Randes derart mit Dichtelementen versehen sein, daß über in der Zeichnung im einzelnen nicht dargestellte Schließelemente ein Anpressdruck zwischen dem oberen Deckteil 12 und den freien Rändern der Rohrsegmente 13, 14, 15, 16 erzeugt wird, über den eine staub- und feuchtigkeitsdichte Abdichtung des Innenraums der Kabelmuffe erzielbar ist.

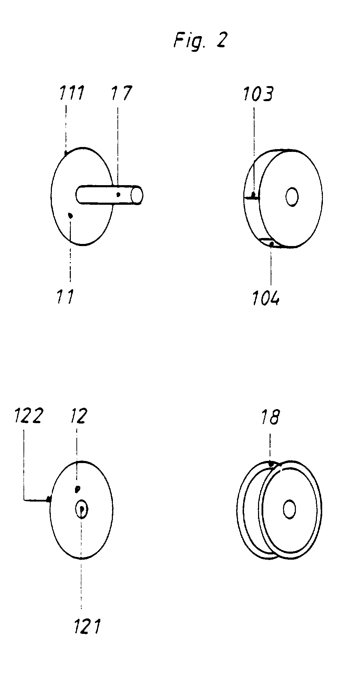

In Fig.2 ist die Kabelmuffe 1 mit verlängerten Wandbereichen dargestellt. Dabei sind die oberen und unteren Deckteile 11, 12 als Scheiben mit überstehendem Rand ausgebildet, der als verlängerter, umlaufender Wandbereich über den Körper der Kabelmuffe 1 vorsteht und einen umlaufenden Kabelkanal 18 zur Aufnahme von Kabelüberlängen bildet.

Diese Form der Kabelmuffe kann auch durch Aufsetzen von ringförmigen Scheiben auf die Kabelmuffe gemäß Fig.1 hergestellt werden. Der umlaufende Kabelkanal 18 kann auch durch separat festlegbare Begrenzungen in flacher Form gebildet werden, wobei diese Begrenzungen radial von den Rohrsegmenten 13, 14, 15, 16 der Kabelmuffe 1 gemäß Fig.1 nach außen abragen und zur Bildung des Kabelkanals 18 im Bereich der Außenränder der Rohrsegmente 13, 14, 15, 16 angeordnet sind.

Es können hier auch U-förmige Segmente eingesetzt werden, die für sich bereits die Form des Kabelkanals 18 bilden und auf den Außenseiten der Rohrsegmente 13, 14, 15, 16 angeordnet sind.

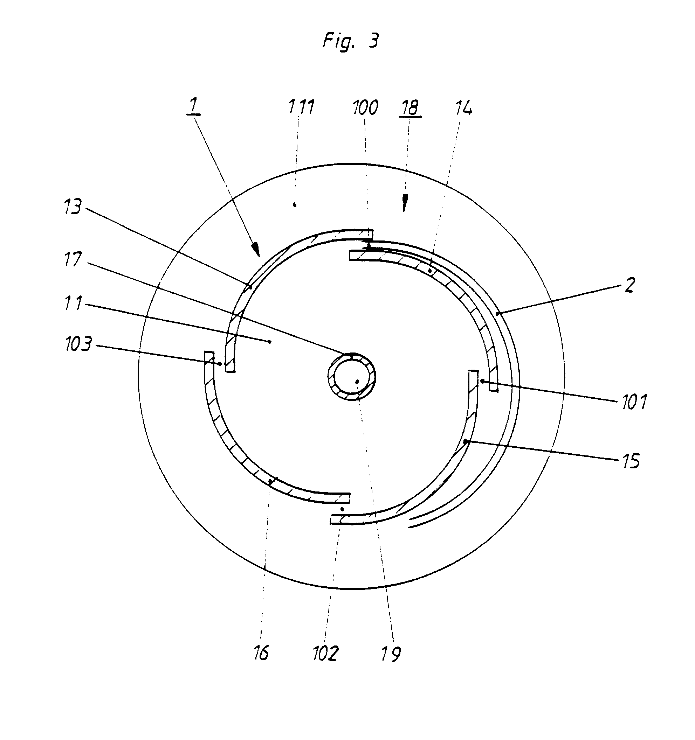

Fig.3 zeigt die Kabelmuffe 1, gemäß Fig.2 in Draufsicht in geöffneter Form. Das untere Deckteil 11 ist hier mit dem nach außen vergrößerten Wandbereich 111 dargestellt. Zusammen mit dem in der Zeichnung nicht gezeigten oberen Deckteil 12, das ebenfalls die Vergrößerung des Wandbereichs 122 besitzt, wird um die eigentliche Kabelmuffe 1 der umlaufende Kabelkanal 18 gebildet. Dieser Kabelkanal 18 dient zur Lagerung von Kabelüberlängen.

Die Kabelmuffe 1 ist entsprechend Fig.1 mit vier Rohrsegmenten 13, 14, 15, 16 aufgebaut, deren Endbereiche - in der Zeichnung nicht dargestellt - einander überlappen und zwischen sich wenigstens eine Kabeleinlaßöffnung 100, 101, 102, 103 bilden.

Andeutungsweise ist ein Kabel 2 dargestellt, welches aus der Kabeleinlaßöffnung 100 austritt und im umlaufenden Kabelkanal 18 gelagert ist.

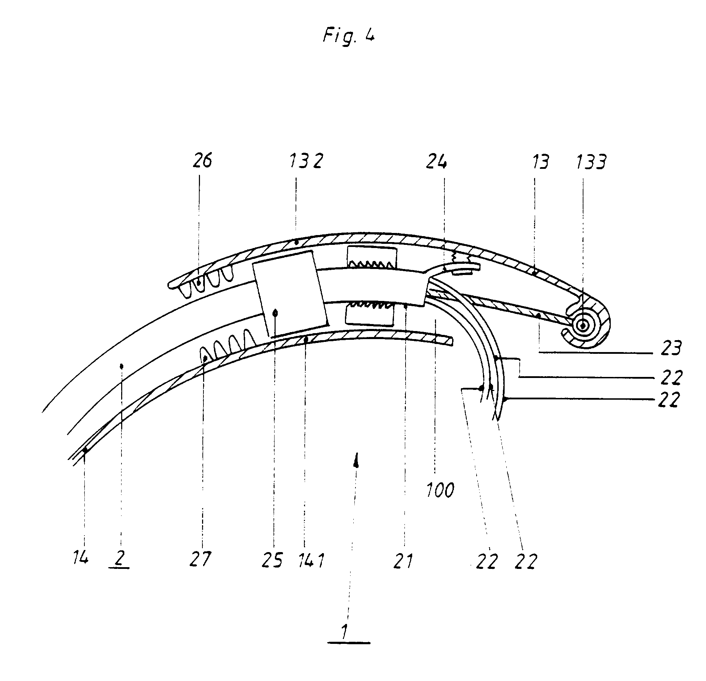

Fig.4 zeigt den Austritt eines Glasfaserkabels 2 aus der Kabeleinlaßöffnung 100. Die Rohrsegmente 13, 14 bilden im Bereich ihrer Überlappung 132, 141 die Kabeleinlaßöffnung 100, über welche die Kabel 2 selbstverständlich auch aus dem Inneren der Kabelmuffe nach außen geführt werden können.

Der Mantel 21 des Glasfaserkabels 2 ist am Austritt aus der Kabelmuffe abgeschält. Dadurch sind die Bündeladern 22 des Glasfaserkabels 2 freigelegt. Die Zugentlastung 23 des Glasfaserkabels kann an einer Halterung 133 des Rohrsegments 13 im Inneren der Kabelmuffe 1 festgelegt werden. Die Kabelmantelabschirmung 24 kann elektrisch mit der Innenwand des Rohrsegments 13 verbunden sein. Im Bereich der Überlappung 132, 141 der beiden Rohrsegmente 13, 14 ist der Kabelmantel 21 durch das Dichtelement 25 gegen die Innenwände der Rohrsegmente 13, 14 abgedichtet. Die Rohrsegmente 13, 14 weisen im Austrittsbereich des Glasfaserkabels 2 aus der Kabelmuffe 1 eine mechanische Kabelführung 26, 27 auf, durch die das Kabel in diesem Bereich geführt ist.

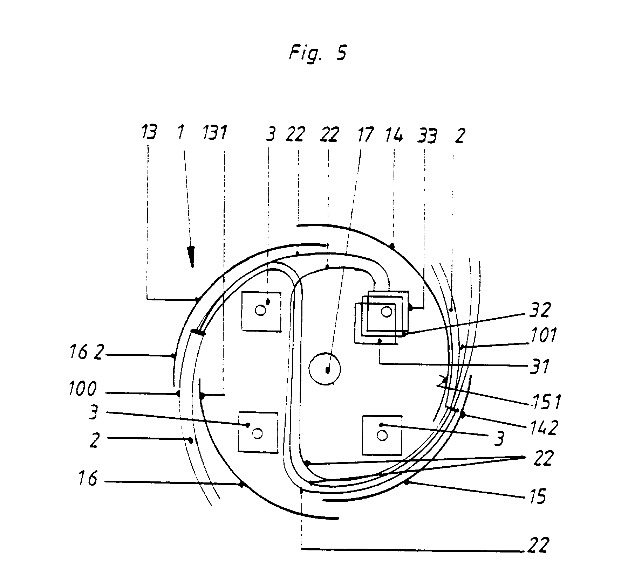

Fig.5 zeigt schließlich die Kabelmuffe nach Fig.3 mit eingelegten Spleisskassetten 3. Im rechten oberen Bereich sind übereinander angeordnete Spleisskassetten 31, 32, 33 angedeutet. Das Lichtwellenleiterkabel 2 ist durch die Kabeleinlaßöffnung 100, 101 in das Innere der Kabelmuffe eingeführt. Die Bündeladern 22 verlaufen zur Abzweigung teilweise im Inneren der Kabelmuffe 1 zur Spleisskassette 33 und teilweise ungeschnitten durch das Innere der Kabelmuffe in das durch die Kabeleinlaßöffnung 101 austretende Glasfaserkabel 2.

Wegen der gleichen Überlängen des Glasfaserkabels vor dem Spleissvorgang liegt das Glasfaserkabel 2 nach Durchführung des Spleissvorgangs nach der Aufwicklung in den umlaufenden Kabelkanal 18 im Dichtbereich der Kabeleinlaßöffnung (Fig.4), während die freigelegten Bündeladern 22 im Innenraum der Kabelmuffe 1 geführt sind.

## Patentansprüche

1. Muffe zum Schutz der Kabelspleiße von elektrischen oder Nachrichtenkabeln, bestehend aus einem oder mehreren Elementen für die Leiterverbindung und einem Muffenkörper als Schutzhülle für eine Spleißverbindung, wobei der Muffenkörper die Dichtfunktion zum Kabel übernimmt und gleichzeitig die Spleißverbindung vor äußeren Einflüssen schützt, dadurch gekennzeichnet, daß der Muffenkörper (1) aus einem oder mehreren Rohrsegmenten (13, 14, 15, 16) besteht, dessen oder deren Längsseiten (132, 141, 142,151, 152, 161, 162, 131) einander mit Abstand überlappen, derart daß die zwischen sich wenigstens einen Kabeleinlaßbereich (100, 101, 102, 103) bilden in den ein Kabel in tangentialer Richtung eingeführt werden kann, und daß das durch die Rohrsegmente umschlossene Aufnahmevolumen des Muffenkörpers (1) von einem oberen und einem unteren Deckteil (11, 12) abgedeckt ist, wobei das untere Deckteil (11) fest mit den Rohrsegmenten (13, 14, 15, 16) verbunden ist.

2. Muffe nach Anspruch 1, dadurch gekennzeichnet, daß im Zentrum des Muffenkörpers (1) ein in seiner Höhe der Länge der Rohrsegmente (13, 14, 15, 16) entsprechender Abstandhalter (17) mit einer zentrischen Durchgangsöffnung (19) angeordnet ist, welcher an seinem freien Ende (171) unter Freihaltung der Durchgangsöffnung (19) mit dem oberen und dem unteren Deckteil (11, 12) dicht verbunden ist.

3. Muffe nach Anspruch 1, dadurch gekennzeichneet, daß die Kabeleinlaßbereiche (100, 101, 102, 103) der überlappenden Rohrsegmente (132, 141, 142, 151, 152, 161, 162, 131) im Querschnitt des Aufnahmevolumens mit oder ohne Belegung mit Kabeln (2) über Dichtelemente (25) gegen die äußere Umgebung abgedichtet sind.

4. Muffe nach Anspruch 1, dadurch gekennzeichnet, daß der obere und der untere Deckteil (11, 12) nach außen verlängerte Wandbereiche (111, 122) aufweisen, welche als Begrenzungen für einen am äußeren Umfang der Kabelmuffe (1) angeordneten umlaufenden Kabelkanal (18) gestaltet sind.

5. Muffe nach Anspruch 2, dadurch gekennzeichnet, daß die Kabelmuffe (1) über die in den Abstandhalter (17) angeordnete zentrische Durchgangsöffnung (19) auf eine Drehachse aufsteckbar und mit dieser verriegelbar ist.

## Claims

1. Collar for protecting spliced joins in electrical or telecommunications cables, consisting of one or more elements for the conductor and a casing to protect the spliced join, the casing forming a seal with the cable and at the same time protecting the spliced join from external influences, characterised in that the casing (1) consists of one or more tube segments (13, 14, 15, 16), the longitudinal sides (132, 141, 142, 151, 152, 161, 162, 131) of which overlap in such a way as to form at least one opening (100, 101, 102, 103) into which a cable can be inserted at a tangent, and in that the interior of the casing (1), which is enclosed by the tube segments, is covered by lower and upper cover sections (11, 12), the lower cover section (11) being firmly joined to the tube segments (13, 14, 15, 16).

2. Collar according to Claim 1, characterised in that positioned in the middle of the casing (1) there is a spacer (17), the height of which corresponds to the length of the tube segments (13, 14, 15, 16), and which incorporates a central tube (19), the free end (171) of the spacer being hermetically joined to the lower and upper cover sections (11, 12) but leaving the tube (19) open.

3. Collar according to Claim 1, characterised in that the openings (100, 101, 102, 103) between the overlapping tube segments (132, 141, 142, 151, 152, 161, 162, 131) are sealed against the external environment by means of sealing elements (25), irrespective of whether the collar is occupied by cables (2).

4. Collar according to Claim 1, characterised in that the lower and upper cover sections (11, 12) have projecting outer wall sections (111, 122) designed to delimit a cable channel (18) which runs around the outer circumference of the casing (1).

5. Collar according to Claim 2, characterised in that the casing (1) can be mounted on an axis via the central tube (19) in the spacer (17) and can be locked in position on the axis.

## Revendications

1. Manchon pour protéger les épissures des câbles électriques ou de télécommunication, constitué d'un ou de plusieurs éléments pour la connexion des câbles et d'un corps servant d'enveloppe de protection pour l'épissure, le corps du manchon assurant l'étanchéité du câble et protégeant en même temps l'épissure des influences extérieures
caractérisé en ce que
le manchon (1) est constitué d'un ou plusieurs segments de tube (13, 14, 15, 16), dont les côtés latéraux (132, 141, 142, 151, 152, 161, 162, 131) se recouvrent à distance donnée, de façon à former entre ces recouvrements une zone d'entrée de câble (100, 101, 102, 103) dans laquelle une longueur d'un mètre de câble puisse être introduite dans le sens tangentiel et en ce que le volume de logement du corps du manchon (1), délimité par les segments de tube, est recouvert par un couvercle supérieur et un couvercle inférieur (11, 12), le couvercle inférieur étant solidaire aux segments de tube (13, 14, 15, 16).

2. Manchon selon la revendication 1, caractérisé en ce qu'au centre du corps du manchon (1) se trouve une entretoise (17) dont la hauteur correspond à la longueur des segments de tube (13, 14, 15, 16), l'entretoise ayant un orifice de passage centré (19), lequel est assemblé de façon étanche à son extrémité libre (171) aux couvercles inférieur et supérieur (11, 12) tout en laissant libre l'orifice de passage (19).

3. Manchon selon la revendication 1, caractérisé en ce que les passages de câbles (100, 101, 102, 103) des segments de tube se recouvrant (132, 141, 142, 151, 152, 161, 162, 131) sont étanches à l'environnement extérieur grâce à des éléments d'étanchéité (25) que le volume de logement soit occupé ou non par un câble (2).

4. Manchon selon la revendication 1, caractérisé en ce que les couvercles supérieur et inférieur (11, 12) forment des flancs prolongés vers l'extérieur (111, 122), servant de réserve à un câble (18) positionné sur le périmètre extérieur du manchon (1).

5. Manchon selon la revendication 2, caractérisé en ce que le manchon (1) est emboîtable par un pivot sur l'orifice de passage (19) situé au centre de l'entretoise (17) et peut être verrouillé.
